# FASCICULE DE BREVET EUROPEEN

(11) **EP 0 957 435 B1**
(45) Date de publication et mention de la délivrance du brevet: **10.11.2004**
(21) Numéro de dépôt: 99401180.7
(22) Date de dépôt: 14.05.1999
(51) Int. Cl.: G06F 13/42, G06F 5/06

(54) **Interface de microprocesseur avec une mémoire externe optimisée par un systéme de décodage anticipé**
Mikroprozessorschnittstelle mit einem durch ein Vordekodierungssystem optimierten externen Speicher
Microprocessor interface with an external memory optimized by an anticipated decoding system

(30) Priorité: 14.05.1998 FR 9806345
(43) Date de publication de la demande: 17.11.1999
(73) Titulaire: STMicroelectronics S.A., 92120 Montrouge (FR)
(72) Inventeur: Agon, François, 83000 Toulon (FR); Vos, Mark, 83000 Toulon (FR)
(74) Mandataire: Bentz, Jean-Paul

(56) Documents cités:
- EP-A- 0 840 233
- US-A- 5 125 079
- US-A- 5 590 349

## Description

La présente invention concerne le domaine des circuits de microprocesseurs comportant une interface avec une mémoire externe (en abrégé EMI).

L'interface EMI est un circuit intermédiaire entre une mémoire de stockage de données et le microprocesseur qui vient lire et écrire les données. L'interface EMI a pour fonction de recueillir et de relayer les transmissions de données entre le microprocesseur et la mémoire externe, transmissions dans le sens de l'écriture et dans le sens de la lecture également, de données en mémoire.

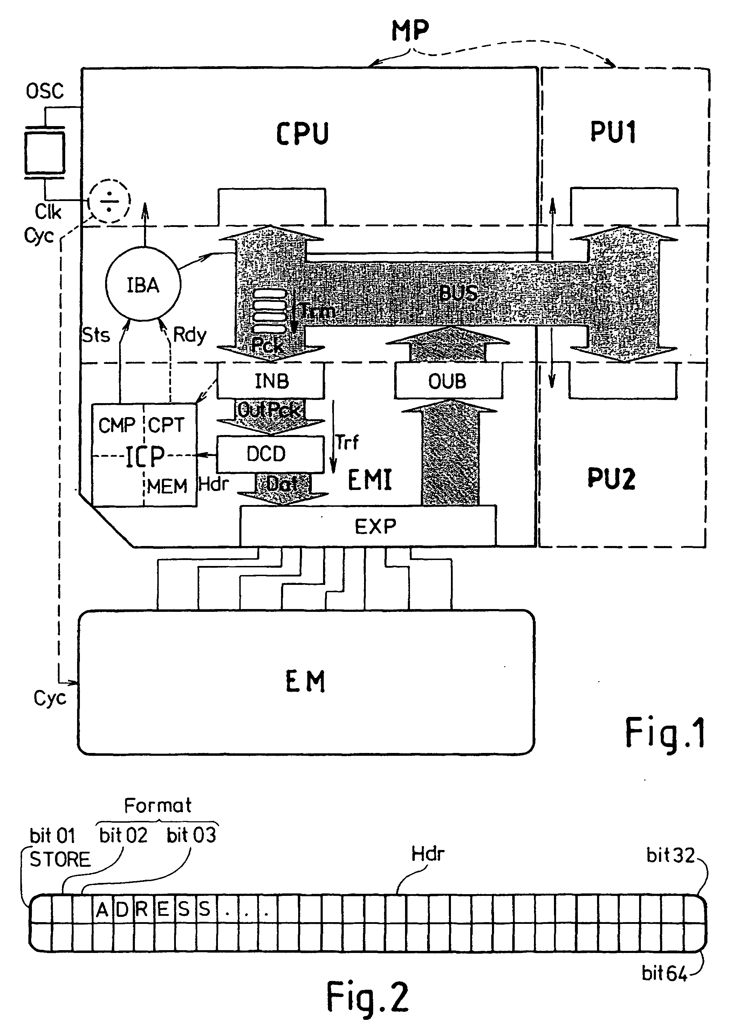

Comme le montre l'architecture connue formant la base du circuit de la figure 1, les deux composants, microprocesseur MP et mémoire EM, sont généralement réalisés sous forme de circuits intégrés séparés. L'interface EMI est préférentiellement implantée dans le circuit intégré du microprocesseur MP. Le microprocesseur lui-même peut être composé d'une ou plusieurs unités de traitement de données. On distingue alors une unité centrale CPU et des unités périphériques PU1 et PU2.

De façon connue, l'interface EMI est reliée par un bus interne du microprocesseur MP à l'unité centraleCPU et à d'éventuelles unités périphériques PU1 et PU2. Le bus parallèle permet de transmettre rapidement les données lues ou destinées à être écrites en mémoire externe EM. Les transmissions de données peuvent provenir indifféremment de l'unité centrale CPU ou de périphériques. Un circuit IBA d'arbitrage du bus interne gère les transmissions de données sur le bus et les requêtes en transmission faites par les unités CPU, PU1, PU2 ou EMI du microprocesseur.

L'interface EMI comporte nécessairement des étages-tampon INB, OUB car l'accès à la mémoire externe EM s'effectue généralement plus lentement que la transmission de données sur le bus interne. De plus, le bus interne peut être réquisitionné pour d'autres transmissions pendant que les données sont transcrites en mémoire EM par l'interface EMI.

Un étage-tampon INB connecté au bus interne est ainsi prévu classiquement dans l'interface EMI, pour recevoir et stocker les données émises par le microprocesseur MP et destinées à être enregistrées en mémoire externe EM. L'interface EMI comporte un autre étage-tampon OUB connecté également au bus interne, pour stocker et retransmettre les données chargées à partir de la mémoire externe EM, données destinées à être transmises à une unité CPU, PU1 ou PU2 du microprocesseur MP. Le premier étage INB qui agit dans le sens de l'écriture est appelé étage-tampon d'entrée (en anglais "input buffer") et le second étage OUB, qui agit dans le sens de la lecture, est appelé étage-tampon de sortie (en anglais "output buffer"). Dans la présente, il sera question essentiellement de l'étage-tampon d'entrée INB.

D'autre part, l'interface EMI comporte un port externe EXP connecté à des bornes de la mémoire EM. Le port externe EXP relaie les données lors d'un transfert Trf en provenance de l'étage-tampon d'entrée INB, ou alternativement à destination de l'étage-tampon de sortie OUB. Cependant, le port EXP n'a généralement pas de fonction de stockage comme un étage-tampon.

Dans les protocoles de transmission on distingue donc deux types de requêtes : chargement (lecture de la mémoire) et enregistrement (écriture en mémoire). Les requêtes de chargement ou d'enregistrement peuvent provenir indifféremment de l'unité centrale CPU ou de périphériques.

On connaît des protocoles simples de transmission dans lesquels les données sont enregistrées ou chargées une par une ou plus précisément mot par mot. Un mot de données a un format déterminé par la norme du microprocesseur, soit 8, 16, 32 ou 64 bits... (donc 1, 2, 4 ou 8 octets...). Le format des mots correspond au nombre de voies du bus interne du microprocesseur. Une requête en chargement comporte simplement un mot de données contenant l'indication de l'ordre de chargement accompagné des bits d'adresse de la case mémoire à lire. Une requête en enregistrement comporte alors deux mots. Le premier mot contient des indications générales : bit d'ordre d'enregistrement accompagné des bits d'adresse de la case mémoire à sélectionner pour l'écriture. Le second mot contient les données au sens propre, c'est-à-dire les données à écrire dans la case mémoire sélectionnée.

L'interface EMI exécute alors de telles requêtes au fur et à mesure de leur réception, en traitant le premier mot et en retenant provisoirement le second mot (cas d'écriture) dans l'étage-tampon INB. Avec ce protocole, l'interface a l'inconvénient de ne pas être disponible pendant tout le temps d'exécution de la requête.

On connaît des protocoles de transmission plus évolués dans lesquels il est prévu de charger ou d'enregistrer une succession de données dans plusieurs cases mémoires successives. L'intérêt de ces protocoles est d'accélérer les opérations de lecture ou d'écriture d'une succession de données, opérations relativement fréquentes. En effet, l'accès à une case mémoire s'opère normalement en plusieurs phases, donc en plusieurs cycles d'horloge. Une première phase correspond à la sélection d'une première partie de l'adresse mémoire, comme le numéro de page, une deuxième phase correspond à la sélection d'une deuxième partie de l'adresse mémoire, comme le numéro de ligne, ..., le nombre de phases pouvant augmenter selon l'étendue des adresses accessibles. Quand on cherche à accéder à des cases mémoires voisines, on peut omettre de resélectionner la partie commune aux deux adresses, comme le numéro de page. Ainsi en regroupant les données à enregistrer ou à charger en une seule requête, on condense les phases d'accès et on accélère les opérations de lecture/écriture. Les données sont alors groupées en paquets de mots de données.

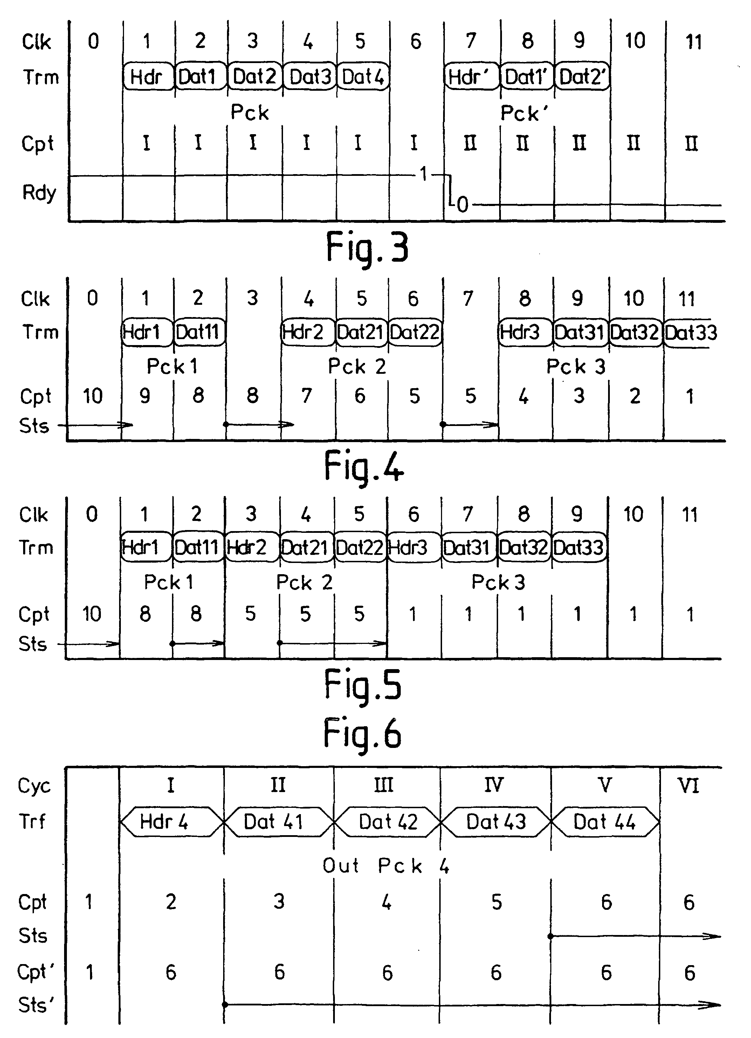

Si on prévoit, comme sur l'exemple de la figure 3, qu'une requête en enregistrement concerne quatre mots de données, le paquet Pck comporte cinq mots : un mot de préambule Hdr suivi des quatre mots de données Dat1, Dat2, Dat3 et Dat4. Le premier mot Hdr contient les indications générales : bits indiquant l'ordre d'enregistrement du paquet, accompagnés des bits d'adresse de la première case mémoire à enregistrer. Comme précédemment, une requête en chargement contient un seul mot de données : bits indiquant l'ordre de chargement accompagnés des bits d'adresse de la première case mémoire à lire pour former le paquet.

On connaît des interfaces de microprocesseur avec une mémoire externe dans lesquelles l'étage-tampon INB peut stocker plusieurs paquets de mots. Ainsi, un étage-tampon INB ayant une capacité de dix lignes de données permet de stocker dix mots, soit deux paquets de mots en supposant que le protocole de transmission prévoit qu'un paquet comporte cinq mots au maximum. L'intérêt d'augmenter la capacité de stockage de l'étage-tampon est d'éviter de bloquer le microprocesseur dans l'attente de la transcription d'un premier paquet en mémoire.

Toutefois, il faut toujours prévoir que l'interface EMI signale au microprocesseur MP, l'état de disponibilité de l'étage-tampon INB, pour éviter qu'une autre transmission de données ne soit envoyée vers l'étage-tampon INB lorsque celui-ci est plein.

Dans les circuits connus, il est prévu que l'interface EMI comporte un compteur CPT intégré au processeur ICP de commande de l'interface. Comme illustré figure 3, le compteur CPT comptabilise le nombre de paquets stockés par l'étage-tampon. Quand le compteur CPT indique que le nombre de paquets stockés par l'étage-tampon INB atteint la capacité nominale en nombre de paquets, le processeur modifie un signal d'état Rdy fourni au circuit d'arbitrage IBA pour que celui-ci rejette toute requête en enregistrement de données. Dans l'exemple de la figure 3, il est prévu que chaque paquet comporte cinq mots au maximum et que l'étage-tampon comporte dix lignes. Dès que l'étage-tampon reçoit un second paquet Pck', alors que le premier paquet Pck est encore stocké, le compteur enregistre le nombre II de paquet et le signal Rdy passe à l'état bas 0, ce qui interdit toute autre transmission.

Un inconvénient d'un tel circuit d'interface de microprocesseur est que le stockage est limité au nombre nominal de paquets de données.

Un autre inconvénient est que la limitation de la capacité de stockage de paquets ralentit les transmissions entre le microprocesseur et la mémoire externe.

Consécutivement, l'attente de transmissions de données peut bloquer les calculs des unités du microprocesseur, ce qui a l'inconvénient de diminuer la vitesse de calcul du microprocesseur.

L'objet de l'invention est de remédier aux inconvénients précités, sans augmenter ni la capacité ni l'encombrement de l'étage-tampon.

Un but de l'invention est d'optimiser la gestion de la capacité de stockage de l'étage-tampon et par suite la capacité de transmission entre le microprocesseur et la mémoire externe.

En particulier, un but de l'invention est d'éviter une sous-utilisation de l'étage-tampon lorsqu'il stocke des paquets de données ayant un nombre de mots inférieur au maximum prévu par le protocole.

Un autre but de l'invention est de signaler à l'avance toute disponibilité future de l'étage-tampon afin de préparer d'autres transmissions de données et d'organiser l'arbitrage des transmissions sur le bus.

Succinctement, ce but est atteint en prévoyant que l'interface décode chaque mot préliminaire d'un paquet de mots de données, le décodage portant plus précisément sur les quelques bits indiquant le format du paquet ; ces indications de format servent à comptabiliser les lignes de l'étage-tampon occupées par le stockage et à en déduire la disponibilité de l'étage-tampon à recevoir d'autres paquets, ce qui permet de stocker un nombre optimal de paquets, nombre éventuellement supérieur au nombre nominal prévu selon le protocole. De plus, le décodage du mot préliminaire du paquet permet de déduire et de signaler à l'avance l'état de disponibilité future de l'étage-tampon, c'est-à-dire après stockage complet dudit paquet.

Il est prévu avantageusement d'effectuer un décodage partiel et anticipé des bits de format avant la fin du cycle de réception du mot préliminaire lui-même.

L'invention est obtenue en mettant en oeuvre un procédé de contrôle d'une interface de circuit de microprocesseur avec une mémoire externe, l'interface comprenant un étage-tampon de capacité déterminée, stockant des paquets de mots de données transmis entre le microprocesseur et la mémoire externe, les paquets comportant un nombre variable de mots de données, le procédé comportant des étapes consistant à :
- calculer la capacité disponible ou non-disponible de l'étage-tampon du fait du stockage des paquets de mots de données, et
- signaler l'état de disponibilité ou de non-disponibilité de l'étage-tampon à recevoir un paquet de mots de données supplémentaire,
avec la particularité que le procédé comporte des étapes intercalaires consistant à :
- décoder des données de format contenues dans chaque paquet, les données de format indiquant le nombre de mots de données dudit paquet, et
- calculer la capacité disponible ou non-disponible de l'étage-tampon du fait du stockage du nombre de mots de données de chaque paquet.

Un tel procédé est destiné en particulier à être mis en oeuvre sur un circuit de microprocesseur comportant une interface avec une mémoire externe.

Alternativement, l'invention est réalisée avec un circuit de microprocesseur comportant une interface avec une mémoire externe, l'interface comprenant :
- un étage-tampon de capacité déterminée, apte à stocker des paquets de mots de données transmis entre le microprocesseur et la mémoire externe, les paquets comportant un nombre variable de mots de données, et
- des moyens de contrôle pour calculer la capacité disponible ou non-disponible de l'étage-tampon du fait du stockage des paquets, et pour signaler l'état de disponibilité de l'étage-tampon à recevoir un paquet supplémentaire,
caractérisé en ce que chaque paquet contient des données de format indiquant le nombre de mots de données dudit paquet, l'interface comprenant :
- des moyens de décodage des données de format indiquant le nombre de mots de données aux moyens de contrôle pour optimiser le calcul de la capacité disponible ou non-disponible de l'étage-tampon.

De préférence, les moyens de décodage sont aptes à décoder les données de format d'un paquet pendant la transmission dudit paquet, les données de format d'un paquet étant contenues dans un mot de données préliminaire dudit paquet.

De préférence, les moyens de contrôle sont aptes à calculer la capacité future disponible ou non-disponible de l'étage-tampon du fait du stockage du paquet de mots de données en cours de transmission, et sont aptes à signaler au cours de la transmission dudit paquet, l'état de disponibilité ou de non-disponibilité future de l'étage-tampon à recevoir un paquet supplémentaire.

Selon le mode de réalisation préféré, les moyens de décodage sont aptes à décoder des données de format contenues dans le mot de données préliminaire pendant la transmission dudit mot de données préliminaire, un mot de données préliminaire contenant quelques bits de données de format.

Selon le mode de réalisation préféré, les moyens de contrôle sont aptes à calculer pendant la transmission du mot de données préliminaire du paquet de mots de données, la capacité future disponible ou non-disponible de l'étage-tampon du fait du stockage dudit paquet de mots de données en cours de transmission, et sont aptes à signaler, dès la fin de la transmission du mot de données préliminaire du paquet de données, l'état de disponibilité ou de non-disponibilité future de l'étage-tampon à recevoir un paquet de mots de données supplémentaire.

D'autres caractéristiques, buts et avantages de l'invention apparaîtront à la lecture de la description et des dessins qui vont suivre, donnés uniquement à titre d'exemples de réalisation non limitatifs. Sur les dessins annexés :
- la figure 1 représente un circuit de microprocesseur comportant une interface avec une mémoire externe mettant en oeuvre les moyens de l'invention,
- la figure 2 représente schématiquement le contenu d'un mot de données préliminaire d'un paquet de données utilisé selon l'invention,
- la figure 3 représente un chronogramme de transmission de données entre un microprocesseur et une interface selon l'état de la technique,
- les figures 4 et 5 représentent des chronogrammes de transmission de données entre un microprocesseur et une interface selon l'invention,
- la figure 6 représente un chronogramme de transmission de données entre une interface et une mémoire externe selon l'invention,
- les figures 7 à 9 représentent sous forme d'organigrammes, des programmes d'interface de microprocesseur mis en oeuvre selon l'invention,

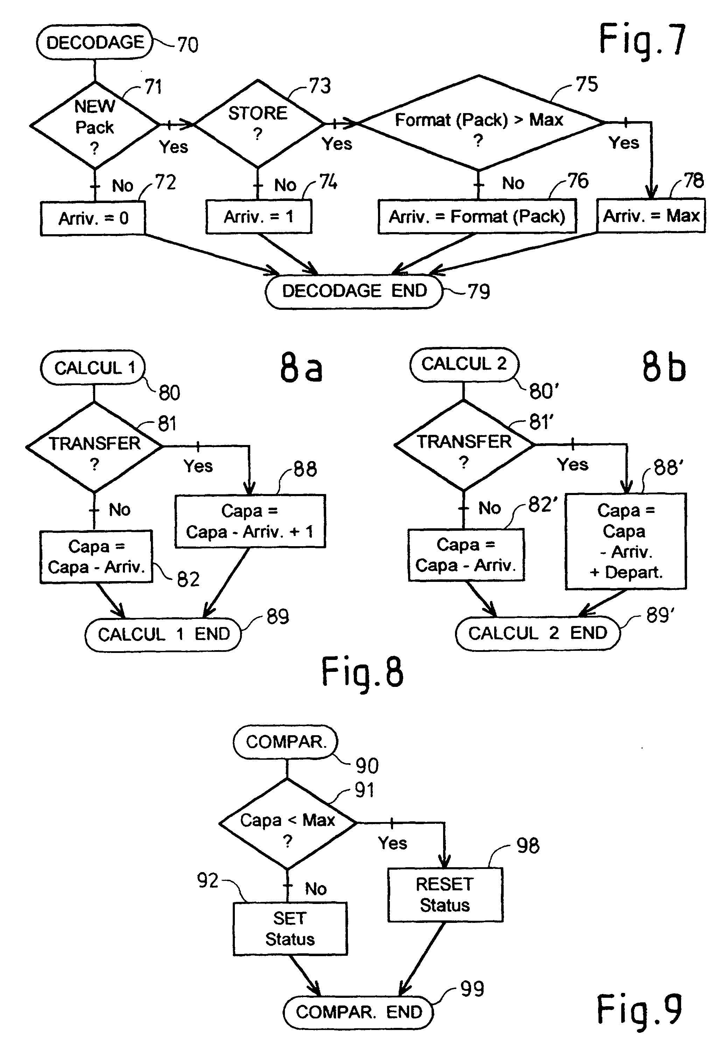

   la figure 7 représentant un programme de décodage de données de format d'un paquet,
   les figures 8a et 8b représentant deux variantes de programmes de calcul de capacité disponible d'étage-tampon, et
   la figure 9 représentant un programme de comparaison de capacité et d'établissement d'état de disponibilité de l'étage-tampon.

Dans la suite de la description, la réalisation et le fonctionnement de l'interface de microprocesseur avec une mémoire externe seront développés en supposant que le protocole de transmission de données entre les unités du microprocesseur et l'interface prévoient que les paquets contiennent un mot préliminaire et zéro à quatre mots de données, soit un maximum de cinq mots par paquet. Il est indiqué aussi que le format des mots est de 64 bits. La mise en oeuvre de l'invention n'est absolument pas limitée par de telles normes numériques, qui servent uniquement à illustrer le fonctionnement et à donner des exemples chiffrés pour fixer les idées.

Comme illustré sur la figure 4 ou sur la figure 3, selon un tel protocole, un paquet de données Pck1, Pck2, Pck3 ou Pck peut comporter respectivement 1, 2, 3 ou 4 mots de données donc 2, 3, 4 ou 5 mots au total, en comptant le mot préliminaire Hdr1, Hdr2, Hdr3 ou Hdr ; ceci lors d'une requête en enregistrement.

Lors d'une requête en chargement transmise par le bus interne à l'interface EMI, il n'y a pas de mot de donnée à enregistrer et le paquet comporte simplement un mot Hdr de requête.

Chaque mot de données est formé d'un groupe de bits d'état binaire 0 ou 1. Le format du mot, c'est-à-dire le nombre de bits de données contenu par le mot, ici 64 bits, est fixé par la norme du microprocesseur et de son interface. Le bus interne (BUS) comporte des lignes parallèles de transmission des données, ici au nombre de 64, puisque le nombre de lignes est préférentiellement égal à la norme du microprocesseur.

La transmission d'un mot sur le bus interne occupe la durée d'un cycle d'horloge Clk. Pendant la durée du cycle d'horloge, tous les bits formant le mot sont présentés en parallèle sur les entrées de l'étage-tampon INB qui peut alors bloquer leur état pour stocker le mot.

Une particularité essentielle de l'invention est de prévoir, lors de la réception d'un paquet de données binaires par l'étage-tampon de l'interface, un décodage des données indiquant le format du paquet.

L'avantage d'une telle particularité est de permettre de connaître exactement et à l'avance le nombre de lignes de l'étage-tampon qui seront occupées par le stockage dudit paquet de mots.

La figure 2 illustre schématiquement un exemple d'assemblage de bits de données, bit01 à bit64, formant un mot préliminaire Hdr d'un paquet.

Un bit de donnée, de préférence le premier bit01, indique, par son état binaire, si ce mot préliminaire concerne une requête d'enregistrement (en anglais "STORE") ou une requête de chargement.

Deux autres bits de données, par exemple bit02 et bit03, indiquent par leur code binaire le nombre de mots de données à enregistrer ou à charger.

Ainsi, on connaît le nombre de mots d'un paquet selon le code binaire indiqué par les bits de données de format comme l'illustre, à titre exemplatif, le tableau d'états des bit01, bit02, bit03 ci-après.

| Tableau d'états des bits de données indiquant le format du paquet | | | |
|---|---|---|---|
| bit01 | bit02 | bit03 | Information |
| 0 | X | X | Requête de chargement, paquet de 1 mot à stocker |
| 1 | 0 | 1 | Paquet de 2 mots à stocker, dont 1 mot de données à enregistrer |
| 1 | 1 | 0 | Paquet de 3 mots à stocker, dont 2 mots de données à enregistrer |
| 1 | 1 | 1 | Paquet de 4 mots à stocker, dont 3 mots de données à enregistrer |
| 1 | 0 | 0 | Paquet de 5 mots à stocker |

L'invention prévoit d'incrémenter ou de "décrémenter" un compteur du nombre de mots de données contenu par le paquet.

Selon une réalisation simple, on peut stocker tout le paquet de données transmis par le bus, puis effectuer le décodage des données indiquant le format du paquet, et utiliser les indications de format résultant du décodage pour incrémenter un compteur.

Le résultat du compteur indique alors le nombre de mots stockés par l'étage-tampon, c'est-à-dire le nombre de lignes non-disponibles. En comparant le résultat du compteur au nombre total de lignes de l'étage-tampon, on peut en déduire la capacité disponible de l'étage-tampon.

Alternativement, comme l'illustre la figure 4, le compteur CPT peut être initialisé avec le nombre total de lignes de l'étage-tampon, ici dix, et être "décrémenté" (diminuer le nombre par décompte) selon les indications de format résultant du décodage. Dans ce cas, à la fin de la réception du paquet, le résultat du compteur CPT indique le nombre de lignes disponibles de l'étage-tampon. Un test ou une comparaison du résultat du compteur avec le nombre maximum de mots que peut contenir un paquet (selon le protocole de transmission) permet de savoir si l'étage-tampon peut recevoir un paquet de données supplémentaire.

Ainsi, comme illustré figure 4, lorsque l'étage-tampon stocke deux paquets Pck1 et Pck2 de deux et trois mots, il reste cinq lignes inoccupées et l'interface signale son aptitude à recevoir un troisième paquet Pck3, en considérant toujours qu'un paquet contient un maximum de cinq mots. L'interface émet alors un signal d'état Sts indiquant la disponibilité de l'étage-tampon à recevoir un paquet supplémentaire.

Selon le mode de réalisation préféré de l'invention, le décodage des données indiquant le format du paquet est effectué dès le début de la réception du paquet. Comme il est prévu que les données de format sont des données préliminaires du paquet, l'état de disponibilité futur peut ainsi être connu avantageusement dès réception du premier mot du paquet.

En effet comme indiqué précédemment, les bits indiquant le format du paquet sont de préférence contenus par le premier mot - le mot préliminaire Hdr - du paquet.

L'invention prévoit donc de préférence de décoder les indications de format du paquet dès réception du mot préliminaire et de calculer aussitôt l'état de disponibilité futur de l'étage-tampon du fait du stockage du paquet en cours de transmission.

La figure 5 montre ainsi que selon le mode de réalisation préféré, le compteur Cpt est "décrémenté" du nombre de mots contenus par un paquet Pck1, Pck2 ou Pck3, soit un décrément d'un nombre 2, 3 ou 4 respectivement, au cours de la transmission du mot préliminaire Hdr1, Hdr2 ou Hdr3 dudit paquet.

La figure 5 montre encore que le signal Sts indiquant l'état de disponibilité de l'étage-tampon est généré par l'interface avant la fin de transmission du paquet, et même dès la fin de transmission du mot préliminaire du paquet.

Il est prévu à cette fin que l'interface comporte un processeur de commande ICP qui effectue d'abord un décodage partiel et immédiat, puis des calculs simples et rapides.

En effet, un circuit logique, tel qu'un processeur, fournit un résultat d'autant plus rapidement que les opérations logiques sont simples et font intervenir peu d'indicateurs logiques. Il est donc prévu que le processeur effectue un décodage partiel du mot préliminaire, c'est-à-dire portant seulement sur les quelques bits indiquant le format du paquet, ce qui permet d'effectuer le décodage quasi-instantanément, en tout cas dans un temps nettement inférieur à un cycle d'horloge Clk.

Le décodage est de préférence immédiat, c'est-à-dire qu'il commence dès le début du cycle 1, 3 ou 6 de l'horloge Clk, pendant lequel le mot préliminaire Hdr1, Hdr2 ou Hdr3 est transmis par le bus à l'interface EMI. Ainsi, le résultat du décodage, c'est-à-dire l'indicateur de format du paquet, est obtenu au cours même du premier cycle de transmission du mot préliminaire.

De suite, les moyens de contrôle reprennent l'indication de format du paquet et effectuent des opérations de calculs simples, comptage CPT et comparaison CMP. Ceci permet d'établir l'état Sts de disponibilité, quasi-instantanément encore.

Ainsi, les moyens de contrôle de l'interface peuvent avantageusement calculer et signaler l'état de disponibilité ou de non-disponibilité future de l'étage-tampon avant la fin du cycle de transmission du mot préliminaire qui contient les bits d'indication de format.

Comme illustré sur le schéma de la figure 1, l'interface de microprocesseur selon l'invention comporte donc des moyens de décodage DCD et des moyens de contrôle ICP, tel qu'un processeur de commande de l'interface. Les moyens de décodage DCD traitent les paquets Pck de données reçues par l'étage-tampon INB, pour extraire les indications de format de paquet contenues dans les mots préliminaires Hdr et les fournir aux moyens de contrôle ICP. Les moyens de contrôle ICP effectuent les calculs et signalent l'état Sts de disponibilité au circuit IBA d'arbitrage du bus interne. Les moyens de décodage et de contrôle peuvent être réalisés sous forme de circuit logique comportant des fonctions de comptage CPT, de comparaison CMP et éventuellement de mémorisation MEM. De façon alternative, les moyens de décodage et de contrôle peuvent être mis en oeuvre en programmant un processeur, notamment suivant les programmes des figures 7 à 9.

Les moyens de décodage et de contrôle peuvent encore et de préférence, être implantés dans le circuit intégré sous forme de circuit logique réalisé et optimisé à l'aide d'un logiciel de conception assisté dont la mise en oeuvre ne sera pas détaillée dans la présente.

La figure 7 illustre un algorithme de décodage destiné à être mis en oeuvre sous forme de circuit logique ou de programme de processeur de l'interface selon l'invention.

Dans les algorithmes des figures 7 et 8, il est prévu qu'une variable Arriv indique le nombre de mots de données contenus par un paquet en cours de réception.

Après des étapes 70 de début et d'initialisation, l'algorithme de décodage comporte des étapes 71 à 79 effectuant les opérations suivantes :
- à l'étape 71, un test du bus détermine si un nouveau paquet est transmis ;
- étape 72, en l'absence de transmission de paquet, la variable Arriv est mise à zéro ;
- étape 73, en cas de transmission de paquet, un test d'indicateur STORE, tel que le bit01 du mot préliminaire Hdr du paquet, détermine si la transmission concerne une requête d'enregistrement ;
- étape 74, à défaut de requête d'enregistrement, la variable Arriv est mise à un, puisque le paquet contient un seul mot Hdr de requête de chargement ;
- étape 75, en cas de requête d'enregistrement, le décodage de l'indicateur de format du paquet (Format Pack) est comparé au format maximum Max prévu selon le protocole de transmission ;
- étape 76, lorsque le format ne dépasse pas le maximum, la variable Arriv est chargée de la valeur du format du paquet (valeur correspondant par exemple, à la valeur binaire des bits de format, tel que bit02 et bit03, du mot préliminaire Hdr, augmentée d'une unité) ;
- étape 78, lorsque le format dépasse le maximum, il est prévu de charger la variable Arriv de la valeur Max de format maximum ;
- les étapes 72, 74, 76 et 78 sont suivies de l'étape 79 de fin du décodage.

Dans les algorithmes de calculs qui suivent aux figures 8-9, une variable Capa indique le nombre de lignes disponibles de l'étage-tampon. Lors de l'initialisation ou en l'absence de stockage de données dans l'étage-tampon, la variable Capa est chargée par le nombre total de lignes de l'étage-tampon. De façon équivalente, on peut développer des algorithmes de calculs dans lesquels une variable indiquerait le nombre de lignes non-disponibles.

La figure 8a illustre un algorithme CALCUL1 permettant aux moyens de contrôle de calculer la capacité disponible de l'étage-tampon et destiné à être mis en oeuvre sous forme de circuit logique ou de programme de processeur de contrôle de l'interface selon l'invention.

Après l'étape 80 de début, l'algorithme de calcul comporte des étapes 81, 82, 88 et 89 effectuant les opérations suivantes :
- à l'étape 81, un test d'indicateur TRANSFER détermine si un transfert de paquet de données est en cours entre l'étage-tampon INB et le port externe EXP ;
- en l'absence de transfert, l'étape 82 prévoit que la valeur de la variable Arriv est soustraite de la valeur de la variable Capa ;
- en cas de transfert en cours, l'étape 88 prévoit que la valeur de la variable Capa, soustraction faite de la valeur de la variable Arriv, est incrémentée d'une unité (un incrément à chaque cycle de transfert d'un mot de données) ;
- l'étape 89 finale de l'algorithme CALCUL1 fait suite à l'étape 88 comme à l'étape 82.

Ainsi, de préférence, le circuit de microprocesseur selon l'invention, comporte des moyens de contrôle ICP aptes à décompter un nombre de lignes de l'étage-tampon occupées par le stockage de données Capa, à déduire un nombre Arriv de mots du paquet de données en cours de transmission, selon le décodage des données de format fourni par les moyens de décodage DCD, DECODAGE, et à calculer CMP, COMPAR le nombre Capa de lignes de l'étage-tampon disponibles du fait du stockage des mots dudit paquet de données en cours de transmission.

La figure 9 illustre un algorithme COMPAR permettant aux moyens de contrôle de comparer la capacité disponible de l'étage-tampon au format maximum d'un paquet de données prévu selon le protocole de transmission.

Un indicateur Status d'état de disponibilité de l'étage-tampon à recevoir un paquet supplémentaire de données est modifié selon le résultat de la comparaison. L'indicateur Status correspond au signal d'état Sts émis par les moyens de contrôle de l'interface. Par convention, l'indicateur est à l'état actif 1 pour indiquer la disponibilité, et à l'état inactif 0 pour indiquer la non-disponibilité.

Après l'étape 90 de début, l'algorithme de comparaison comporte des étapes 91, 92, 98 et 99 effectuant les opérations suivantes :
- à l'étape 91, un test indique si la valeur de la variable Capa est inférieure à la valeur Max, qui est le nombre maximum de mots contenus dans un paquet de données, selon le protocole ;
- si la capacité disponible est supérieure ou égale au format maximum des paquets, l'étape 92 prévoit de mettre à l'état 1 l'indicateur Status, ce qui active le signal Sts d'état de disponibilité ;
- si la capacité disponible est inférieure au format maximum, l'étape 98 prévoit de mettre à l'état 0 l'indicateur Status, ce qui désactive le signal d'état Sts (non-disponibilité) ;
- l'étape 99 de fin de comparaison fait suite aux étapes 92 et 98 et achève le programme de l'interface.

Ainsi, de préférence, le circuit de microprocesseur comporte des moyens de contrôle ICP aptes en outre à compter CPT, CALCUL2 un nombre Départ de lignes de l'étage-tampon libérées par le transfert Trf d'un pacquet Pck de données vers la mémoire externe EM.

Il apparaît clairement sur les figures 7 à 9 que les algorithmes de décodage, de calcul et de comparaison s'enchaînent naturellement.

Cependant, la figure 8b indique une alternative préférée d'algorithme CALCUL2 permettant aux moyens de contrôle de calculer la capacité disponible de l'étage-tampon de façon optimale.

En effet, l'algorithme de la figure 8b tient compte d'une donnée supplémentaire : le nombre de mots de données contenus par un paquet en cours de transfert. Ce nombre est mémorisé par une variable Départ.

L'algorithme CALCUL2 de la figure 8b diffère de l'algorithme CALCUL1 de la figure 8a seulement au niveau de l'étape 88. L'opération est en effet la suivante :
- lors d'un transfert d'un paquet de données entre l'étage-tampon et le port externe, l'étape 88' prévoit que la valeur de la variable Capa, soustraction faite de la valeur de la variable Arriv, est augmentée de la valeur de la variable Départ.

L'avantage de la prise en compte du format d'un paquet en cours de transfert (sortant de l'étage-tampon) est de signaler de façon précoce l'état de disponibilité de l'étage-tampon au microprocesseur.

Cet avantage apparaît sur le chronogramme de la figure 6 qui illustre une opération de déstockage d'un paquet de données Outpck4. L'opération concerne un transfert Trf de cinq mots de données Hdr4, Dat41, Dat42, Dat43 et Dat44 depuis l'étage-tampon INB vers le port externe EXP et la mémoire EM.

Les deux indications Cpt et Sts figurant en premier lieu sur la figure 4 correspondent aux résultats du compteur de calcul et au signal d'état de disponibilité obtenus suivant l'algorithme CALCUL1 de la figure 8a. Le compteur Cpt est ainsi décrémenté d'une unité au fur et à mesure du transfert de chaque mot de donnée du paquet Outpck4, donc à chaque cycle I, II, III, IV ou V d'enregistrement.

En second lieu, la figure 4 indique des résultats de compteur Cpt' de calcul de capacité et de signal Sts' d'état de disponibilité obtenus suivant l'algorithme CALCUL2 de la figure 8b.

On remarque que, dès le transfert du mot préliminaire Hdr4 lors du cycle I d'enregistrement, l'indication de format du paquet Outpck4, soit cinq mots, est comptabilisée par le compteur Cpt', le résultat augmentant de cinq unités lors du premier cycle I.

Ainsi, dès le début du transfert, le compteur Cpt' indique que le nombre de lignes libérées est supérieur à cinq, ce qui laisse la place à la réception d'un nouveau paquet.

La prise en compte du format des paquets de données sortant de l'étage-tampon permet donc de calculer de façon précoce, la capacité disponible ou non-disponible de l'étage-tampon du fait du déstockage des données.

Consécutivement, les moyens de contrôle peuvent émettre le signal Sts' d'état de disponibilité de l'étage-tampon, dès la fin du cycle I de transfert du mot préliminaire.

Le circuit IBA d'arbitrage du bus interne du microprocesseur est alors averti de façon précoce de l'état de disponibilité futur de l'étage-tampon.

Le circuit IBA peut utiliser cette information pour que les unités du microprocesseur préparent d'autres transmissions de données. Le circuit IBA peut aussi utiliser cette information pour autoriser aussitôt une transmission de données.

La gestion de l'étage-tampon est alors optimale puisque l'étage-tampon peut recevoir un mot de données à stocker au fur et à mesure du déstockage d'un mot de données.

Cette mise en oeuvre convient au cas où la transcription de données de l'interface vers la mémoire externe se fait au même rythme que la transmission de données du microprocesseur vers l'interface. Dans ce cas, l'algorithme CALCUL2 permet avantageusement un écoulement continu du flot de données (en anglais "stream-line").

Cependant, les cycles de transcription des mots de données de l'interface vers la mémoire sont souvent plus longs que les cycles de transmission des mots de données du microprocesseur vers l'interface. Un cycle de transmission s'étend sur un nombre entier, généralement deux ou quatre, de cycles d'horloge, alors qu'un cycle de transmission dure un seul cycle d'horloge, comme le suggère la confrontation des figures 5 et 6. Dans ce cas, il est préférable de mettre en oeuvre l'algorithme CALCUL1 ou de modifier l'algorithme CALCUL2 pour tenir compte du rapport des cadences de transcription et de transmission.

On note encore que l'indication de format d'un paquet transféré peut être fournie soit en se remémorisant l'indication de format décodée et mémorisée lors du stockage de ce paquet, soit en effectuant un nouveau décodage des données indiquant le format lors du déstockage du paquet.

Finalement, comme l'indique la figure 1, les moyens de contrôle ICP (nommément processeur de commande de l'interface) comportent de préférence un compteur CPT pour effectuer les calculs, un comparateur pour établir l'état de disponibilité Status et le signal Sts, ainsi qu'éventuellement une mémoire Mem pour retenir les données indiquant les formats des paquets stockés et fournir ces indications lors du déstockage.

D'autres modes de réalisations apparaîtront à l'homme du métier sans sortir du cadre de la présente invention, tel que défini par les revendications ci-après.

## Revendications

1. Circuit de microprocesseur (MP) comportant une interface (EMI) avec une mémoire externe (EM), l'interface comprenant :
- un étage-tampon (INB) de capacité déterminée, apte à stocker des paquets de mots de données transmis entre le microprocesseur et la mémoire externe, les paquets comportant un nombre variable de mots de données, et
- des moyens de contrôle (ICP) pour calculer (CPT) la capacité disponible ou non-disponible de l'étage-tampon du fait du stockage des paquets, et pour signaler l'état (Sts) de disponibilité de l'étage-tampon à recevoir un paquet supplémentaire,
**caractérisé en ce que** chaque paquet contient des données de format (Hdr) indiquant le nombre de mots de données dudit paquet, l'interface comprenant :
- des moyens de décodage (DCD) des données de format indiquant le nombre de mots de données aux moyens de contrôle pour optimiser le calcul de la capacité.

2. Circuit de microprocesseur selon la revendication 1, **caractérisé en ce que** les moyens de décodage (DCD) sont aptes à décoder les données (Hdr1) de format indiquant le nombre de mots de données d'un paquet (Pck1) pendant la transmission (Trm) dudit paquet (Pck1), les données (Hdr1) de format d'un paquet (Pck1) étant contenues dans un mot de données préliminaire (Hdr1) dudit paquet (Pck1).

3. Circuit de microprocesseur selon la revendication 2, **caractérisé en ce que** les moyens de contrôle (ICP) sont aptes à calculer (CPT, CMP) la capacité future disponible ou non-disponible de l'étage-tampon du fait du stockage du nombre de mots de données du paquet (Pck1) en cours de transmission (Trm).

4. Circuit de microprocesseur selon la revendication 3, **caractérisé en ce que** les moyens de contrôle (ICP) sont aptes à signaler, en cours de transmission d'un paquet (Pck1), l'état (Sts) de disponibilité ou de non-disponibilité future de l'étage-tampon (INB) à recevoir un paquet (Pck2) supplémentaire.

5. Circuit de microprocesseur selon l'une des revendications 2 à 4, **caractérisé en ce que** les moyens de décodage (DCD) sont aptes à décoder des données de format (Format) contenues dans le mot de données préliminaire (Hdr) pendant la transmission (Trm) dudit mot de données préliminaire, un mot de données préliminaire (Hdr) contenant quelques bits (bit02, bit03) de données de format.

6. Circuit de microprocesseur selon l'une des revendications 2 à 5, **caractérisé en ce que** les moyens de contrôle (ICP) sont aptes à calculer (CPT, CMP) pendant la transmission (Trm) du mot de données préliminaire (Hdr1) du paquet de mots de données, la capacité future disponible (Cpt) ou non-disponible de l'étage-tampon du fait du stockage dudit paquet (Pck1) en cours de transmission.

7. Circuit de microprocesseur selon l'une des revendications 2 à 6, **caractérisé en ce que** les moyens de contrôle sont aptes à signaler, dès la fin de la transmission (Trm) du mot de données préliminaire (Hdr1) du paquet de mots de données (Pck1), l'état (Sts) de disponibilité ou de non-disponibilité future de l'étage-tampon à recevoir un paquet supplémentaire (Pck2).

8. Circuit de microprocesseur selon l'une des revendications 1 à 7, **caractérisé en ce que** les moyens de contrôle (ICP) sont aptes à mémoriser (MEM) le décodage des données de format (Hdr) d'un paquet (Pck) stocké par l'étage-tampon, pour fournir ledit décodage des données de format lors d'un transfert (Trf) dudit paquet (Out Pck) entre l'étage-tampon (INB) et la mémoire externe (EM).

9. Circuit de microprocesseur selon l'une des revendications 1 à 7, **caractérisé en ce que** les moyens de décodage (DCD) effectuent un nouveau décodage des données (Hdr4) de format d'un paquet (Out Pck 4) lors d'un transfert (Trf) dudit paquet (Out Pck 4) entre l'étage-tampon (INB) et la mémoire externe (EM).

10. Circuit de microprocesseur selon la revendication 8 ou 9, **caractérisé en ce que** les moyens de contrôle (ICP) sont aptes en outre, à calculer (CPT, CALCUL2) la capacité de l'étage-tampon libérée du fait de déstockage du paquet (Out Pck 4) en cours de transfert (Trf).

11. Circuit de microprocesseur selon l'une des revendications 1 à 10, **caractérisé en ce que** les moyens de contrôle (ICP) sont aptes à comparer (CPR, COMPAR) la capacité (Capa) disponible de l'étage-tampon par rapport à un format maximal (Max) des paquets (Pck) de mots de données, et à déduire de la comparaison l'état (Sts, Status) de disponibilité de l'étage-tampon (INB) à recevoir un paquet supplémentaire (Pck3).

12. Procédé de contrôle d'une interface (EMI) de circuit de microprocesseur (MP) avec une mémoire externe (EM), l'interface comprenant un étage-tampon (INB) de capacité déterminée, stockant des paquets (Pck) de mots de données transmis entre le microprocesseur et la mémoire externe, les paquets comportant un nombre variable de mots de données, le procédé comportant des étapes consistant à :
- calculer (CPT) la capacité disponible ou non-disponible de l'étage-tampon du fait du stockage des paquets de mots de données, et
- signaler (COMPAR, Status) l'état (Sts) de disponibilité ou de non-disponibilité de l'étage-tampon à recevoir un paquet de mots de données supplémentaire (Pck3),
**caractérisé en ce que** le procédé comporte des étapes intercalaires consistant à :
- décoder (DCD, DECODAGE) des données de format (Hdr, Format) contenues dans chaque paquet, les données de format indiquant le nombre de mots de données dudit paquet, et
- calculer (CPT) la capacité disponible ou non-disponible de l'étage-tampon du fait du stockage du nombre de mots de données de chaque paquet (Pckl, Pck2, Pck3).

13. Procédé selon la revendication 12, **caractérisé en ce que** l'étape de décodage (DCD, DECODAGE) des données de format (Format) d'un paquet (Pck, Pack) est effectuée pendant la transmission (Trm) dudit paquet, les données de format d'un paquet de mots de données étant contenues dans un mot de données préliminaire (Hdr) dudit paquet (Pck) de mots de données.

14. Procédé selon la revendication 13, **caractérisé en ce que** l'étape de décodage (DCD, DECODAGE) des données de format (Format) d'un paquet (Pck) de mots de données est effectuée pendant la transmission (Trm) du mot de données préliminaire (Hdr) dudit paquet de mots de données.

15. Procédé selon la revendication 13 ou 14, **caractérisé en ce qu'**il comporte une étape consistant à calculer (CPT, CALCUL1) la capacité future disponible (Capa) ou non-disponible de l'étage-tampon du fait du stockage du nombre de mots de données d'un paquet (Pck1) en cours de transmission, le calcul (CALCUL1) utilisant le décodage (DECODAGE) des données de format effectué pendant la transmission (Trm) dudit paquet (Pck1), le calcul (Cpt) étant effectué pendant la transmission (Trm) dudit paquet (Pck).

16. Procédé selon la revendication 15, **caractérisé en ce que** l'étape de calcul (CPT, CALCUL1) de la capacité future disponible (Capa) ou non-disponible de l'étage-tampon est effectuée pendant la transmission (Trm) du mot de données préliminaire (Hdr1) dudit paquet (Pck1) de mots de données.

17. Procédé selon l'une des revendications 12 à 16, **caractérisé en ce qu'**il comporte une étape consistant à signaler (COMPAR, Status) pendant la transmission (Trm) d'un paquet (Pck2), l'état (Sts) de disponibilité ou de non-disponibilité future de l'étage-tampon à recevoir un paquet supplémentaire (Pck3).

18. Procédé selon la revendication 17, **caractérisé en ce que** l'état (Sts) de disponibilité ou de non-disponibilité future de l'étage-tampon est signalé dès la fin de transmission (Trm) du mot de données préliminaire (Hdr2) dudit paquet (Pck2) de mots de données.

## Claims

1. Microprocessor circuit (MP) comprising an interface (EMI) with an external memory (MEM), the interface comprising:
- a buffer stage (INB) of given capacity, suitable for storage of the packages of data words transmitted between the microprocessor and the external memory, the packages comprising a variable number of data words, and
- control means (ICP) for calculating (CPT) the available or unavailable capacity of the buffer stage due to the storage of the packages, and for signalling the status (Sts) of availability of the buffer stage to receive an additional package,
***characterised in that*** each package contains format data (Hdr) indicating the number of data words of said package, the interface comprising:
- means (DCD) for decoding the format data indicating the number of data words to the control means in order to optimise the calculation of the capacity.

2. Microprocessor circuit according to claim 1, ***characterised in that*** the decoding means (DCD) are suitable for decoding the format data (Hdr1) indicating the number of data words of a package (Pck1) during the transmission (Trm) of said package (Pck1), the format data (Hdr1) of a package (Pck1) being contained in a preliminary data word (Hdr1) of said package (Pck1).

3. Microprocessor circuit according to claim 2, ***characterised in that*** the control means (ICP) are suitable for calculating (CPT, CMP) the future available or unavailable capacity of the buffer stage due to the storage of the number of data words of the package (Pck1) in the course of transmission (Trm).

4. Microprocessor circuit according to claim 3, ***characterised in that*** the control means (ICP) are suitable for signalling the status (Sts) of future availability or unavailability of the buffer stage (INB) to receive an additional package (Pck2) in the course of transmission of a package (Pck1).

5. Microprocessor circuit according to one of claims 2 to 4, ***characterised in that*** the decoding means (DCD) are suitable for decoding format data (Format) contained in the preliminary data word (Hdr) during the transmission (Trm) of said preliminary data word, a preliminary data word (Hdr) containing a few bits (bit02, bit03) of format data.

6. Microprocessor circuit according to one of claims 2 to 5, ***characterised in that*** the control means (ICP) are suitable for calculating (CPT, CMP) the future available capacity (Cpt) or unavailable capacity of the buffer stage due to the storage of said package (Pck1) in the course of transmission during the transmission (Trm) of the preliminary data word (Hdr1) of the package of data words.

7. Microprocessor circuit according to one of claims 2 to 6, ***characterised in that*** the control means are suitable for signalling the status (Sts) of future availability or unavailability of the buffer stage to receive an additional package (Pck2) at the end of transmission (Trm) of the preliminary data word (Hdr1) of the package of data words (Pck1).

8. Microprocessor circuit according to one of claims 1 to 7, ***characterised in that*** the control means (ICP) are suitable for memorising (MEM) the decoding of the format data (Hdr) of a package (Pck) stored by the buffer stage in order to provide said decoding of the format data during a transfer (Trf) of said package (Out Pck) between the buffer stage (INB) and the external memory (EM).

9. Microprocessor circuit according to one of claims 1 to 7, ***characterised in that*** the decoding means (DCD) carry out a fresh decoding of the format data (Hdr4) of a package (Out Pck 4) during a transfer (Trf) of said package (Out Pck 4) between the buffer stage (INB) and the external memory (EM).

10. Microprocessor circuit according to claim 8 or 9, ***characterised in that*** the control means (ICP) are also suitable for calculating (CPT, CALCUL2) the capacity of the buffer stage liberated due to the removal of the package (Out PCK 4) in the course of transfer (Trf).

11. Microprocessor circuit according to one of claims 1 to 10, ***characterised in that*** the control means (ICP) are suitable for comparing (CPR, COMPAR) the available capacity (Capa) of the buffer stage in relation to a maximum format (Max) of the packages (Pck) of data words, and for deducing from the comparison the status (Sts, Status) of availability of the buffer stage (INB) to receive an additional package (Pck3).

12. Method for controlling an interface (EMI) of a microprocessor circuit (MP) with an external memory (EM), the interface comprising a buffer stage (INB) of given capacity, storing packages (Pck) of data words transmitted between the microprocessor and the external memory, the packages comprising a variable number of data words, the method comprising steps consisting in:
- calculating (CPT) the available or unavailable capacity of the buffer stage due to the storage of the packages of data words, and
- signalling (COMPAR, Status) the status (Sts) of availability or unavailability of the buffer stage to receive an additional package (Pck3) of data words,
***characterised in that*** the method comprises intermediate steps consisting in:
- decoding (DCD, DECODING) format data (Hdr, Format) contained in each package, the format data indicating the number of data words of said package, and
- calculating (CPT) the available or unavailable capacity of the buffer stage due to the storage of the number of data words of each package (Pckl, Pck2, Pck3).

13. Method according to claim 12, ***characterised in that*** the decoding step (DCD, DECODING) of the format data (Format) of a package (Pck, Pack) is carried out during the transmission (Trm) of said package, the format data of a package of data words being contained in a preliminary data word (Hdr) of said package (Pck) of data words.

14. Method according to claim 13, ***characterised in that*** the decoding step (DCD, DECODING) of the format data (Format) of a package (Pck) of data words is carried out during the transmission (Trm) of the preliminary data word (Hdr) of said package of data words.

15. Method according to claim 13 or 14, ***characterised in that*** it comprises a step consisting in calculating (CPT, CALCUL1) the future available capacity (Capa) or unavailable capacity of the buffer stage due to the storage of the number of data words of a package (Pck1) in the course of transmission, the calculation (CALCUL1) using the decoding (DECODING) of the format data carried out during the transmission (Trm) of said package (Pck1), the calculation (Cpt) being carried out during the transmission (Trm) of said package (Pck).

16. Method according to claim 15, ***characterised in that*** the calculating step (CPT, CALCUL1) of the future available capacity (Capa) or unavailable capacity of the buffer stage is carried out during the transmission (Trm) of the preliminary data word (Hdr1) of said package (Pck1) of data words.

17. Method according to one of claims 12 to 16, ***characterised in that*** it comprises a step consisting in signalling (COMPAR, Status) the status (Sts) of future availability or unavailability of the buffer stage to receive an additional package (Pck3) during the transmission (Trm) of a package (Pck2).

18. Method according to claim 17, ***characterised in that*** the status (Sts) of future availability or unavailability of the buffer stage is signalled at the end of transmission (Trm) of the preliminary data word (Hdr2) of said package (Pck2) of data words.

## Patentansprüche

1. Microprozessorschaltung (MP) mit einer Schnittstelle (EMI) mit einem externen Speicher (EM), wobei die Schnittstelle aufweist:
- eine Pufferstufe (INB) von bestimmter Kapazität, die so ausgebildet ist, dass diese Pakete von Datenworten speichern kann, die zwischen dem Microprozessor und dem externen Speicher übertragen werden, wobei die Pakete eine Anzahl variabler Datenworte umfassen, und
- Steuermittel (ICP), um die verfügbare oder nicht verfügbare Kapazität des Stufenpuffers für die Speicherung der Pakete zu berechnen (CPT), und um den Zustand (Sts) der Verfügbarkeit des Stufenpuffers anzuzeigen, ein zusätzliches Paket annehmen zu können,
**dadurch gekennzeichnet,**
**dass** jedes Paket Format-Daten (Hdr) enthält, die die Anzahl von Datenworten des Pakets anzeigen, wobei die Schnittstelle aufweist:
- Dekodierungsmittel (DCD) der Format-Daten, welche den Steuermitteln die Anzahl der Datenworte anzeigen, um die Berechnung der Kapazität zu optimieren.

2. Microprozessorschaltung nach Anspruch 1,
**dadurch gekennzeichnet,**
**dass** die Dekodierungsmittel (DCD) so ausgebildet sind, dass sie die Format-Daten (Hdr1) dekodieren, welche die Anzahl der Datenworte eines Pakets (Pck1) während der Übertragung (Trm) des Pakets (Pck1) anzeigen, wobei die Format-Daten (Hdr1) eines Pakets (Pck1) in einem vorläufigen Datenwort (Hdr1) des Pakets (Pck1) enthalten sind.

3. Microprozessorschaltung nach Anspruch 2,
**dadurch gekennzeichnet,**
**dass** die Steuermittel (ICP) so ausgebildet sind, dass sie die zukünftig verfügbare oder nicht verfügbare Kapazität des Stufenpuffers für die Speicherung der Anzahl von Datenworten des Pakets (Pck1) im Verlauf der Übertragung (Trm) berechnen (CPT, CMP) können.

4. Microprozessorschaltung nach Anspruch 3,
**dadurch gekennzeichnet,**
**dass** die Steuermittel (ICP) so ausgebildet sind, dass sie im Verlauf der Übertragung eines Pakets (Pck1) den Zustand (Sts) der zukünftigen Verfügbarkeit oder Nicht-Verfügbarkeit des Stufenpuffers (INB) hinsichtlich der Annahme eines zusätzlichen Pakets (Pck2) anzeigen können.

5. Microprozessorschaltung nach einem der Ansprüche 2 bis 4,
**dadurch gekennzeichnet,**
**dass** die Dekodierungsmittel (DCD) so ausgebildet sind, dass sie die Format-Daten (Format), die in dem vorläufigen Datenwort (Hdr) enthalten sind, während der Übertragung (Trm) des vorläufigen Datenwortes dekodieren können, wobei ein vorläufiges Datenwort (Hdr) einige Bits (bit02, bit03) von Format-Daten enthält.

6. Microprozessorschaltung nach einem der Ansprüche 2 bis 5,
**dadurch gekennzeichnet,**
**dass** die Steuermittel (ICP) so ausgebildet sind, dass sie während der Übertragung (Trm) des vorläufigen Datenwortes (Hdr1) des Pakets von Datenworten die zukünftig verfügbare (Cpt) oder nicht verfügbare Kapazität des Stufenpuffers aufgrund der Speicherung dieses Pakets (Pck1) im Verlauf der Übertragung berechnen (CPT, CMP) können.

7. Microprozessorschaltung nach einem der Ansprüche 2 bis 6,
**dadurch gekennzeichnet,**
**dass** die Steuermittel so ausgebildet sind, dass sie vom Ende der Übertragung (Trm) des vorläufigen Datenwortes (Hdr1) des Pakets von Datenwörtern (Pck1) ausgehend den Zustand (Sts) der zukünftigen Verfügbarkeit oder Nicht-Verfügbarkeit des Stufenpuffers hinsichtlich der Annahme eines zusätzlichen Pakets (Pck2) anzeigen können.

8. Microprozessorschaltung nach einem der Ansprüche 1 bis 7,
**dadurch gekennzeichnet,**
**dass** die Steuermittel (ICP) so ausgebildet sind, dass sie die Dekodierung der Format-Daten (Hdr) eines durch den Stufenpuffer eingelesenen Pakets (Pck) speichern können, um die Dekodierung der Format-Daten während einer Übertragung (Trf) des Pakets (Out Pck) zwischen dem Stufenpuffer (INB) und dem externen Speicher (EM) durchzuführen.

9. Microprozessorschaltung nach einem der Ansprüche 1 bis 7,
**dadurch gekennzeichnet,**
**dass** die Dekodierungsmittel (DCD) eine neue Dekodierung von Format-Daten (Hdr4) eines Pakets (Out Pck 4) während einer Übertragung (Trf) des Pakets (Out Pck 4) zwischen dem Stufenpuffer (INB) und dem externen Speicher (EM) durchführen.

10. Microprozessorschaltung nach Anspruch 8 oder 9,
**dadurch gekennzeichnet,**
**dass** die Steuermittel (ICP) ferner so ausgebildet sind, dass sie die Kapazität des aufgrund der Auslesung des Pakets (Out Pck 4) im Verlauf der Übertragung (Trf) freigewordenen Stufenpuffers berechnen können (CPT, CALKUL2).

11. Microprozessorschaltung nach einem der Ansprüche 1 bis 10,
**dadurch gekennzeichnet,**
**dass** die Steuermittel (ICP) so ausgebildet sind, dass sie die verfügbare Kapazität (Capa) des Stufenpuffers in Bezug auf ein Maximal-Format (Max) der Pakete (Pck) von Datenworten vergleichen können (CPR, COMPAR), und aus dem Vergleich den Zustand (Sts, Status) der Verfügbarkeit des Stufenpuffers (INB) hinsichtlich der Annahme eines zusätzlichen Pakets (Pck3) herleiten können.

12. Verfahren zur Steuerung einer Schnittstelle (EMI) einer Microprozessorschaltung (MP) mit einem externen Speicher (EM), wobei die Schnittstelle einen Stufenpuffer (INB) mit bestimmter Kapazität umfasst, der Pakete (Pck) von zwischen dem Microprozessor und dem externen Speicher übertragenen Datenworten einliest, wobei die Pakete eine Anzahl variabler Datenworte umfassen, wobei das Verfahren die Schritte umfasst, bestehend aus:
- Berechnen (CPT) der verfügbaren oder nicht verfügbaren Kapazität des Stufenpuffers aufgrund der Speicherung von Paketen von Datenworten und
- Anzeigen (COMPAR, Status) des Zustandes (Sts) der Verfügbarkeit oder Nicht-Verfügbarkeit des Stufenpuffers ninsichtlich der Annahme eines Pakets von zusätzlichen Datenworten (Pck3),
**dadurch gekennzeichnet,**
**dass** das Verfahren zwischengeschaltete Schritte umfasst, bestehend aus:
- Dekodieren (DCD, DECODAGE) von in jedem Paket enthaltenen Format-Daten (Hdr, Format), wobei die Format-Daten die Anzahl von Datenworten des Pakets anzeigen, und
- Berechnen (CPT) der verfügbaren oder nicht verfügbaren Kapazität des Stufenpuffers aufgrund Speicherung der Anzahl von Datenworten jedes Pakets (Pck1, Pck2, Pck3).

13. Verfahren nach Anspruch 12,
**dadurch gekennzeichnet,**
**dass** der Schritt der Dekodierung (DCD, DECODAGE) der Format-Daten (Format) eines Pakets (Pck, Pack) während der Übertragung (Trm) des Pakets durchgeführt wird, wobei die Format-Daten eines Pakets von Datenworten in einem vorläufigen Datenwort (Hdr) des Pakets (Pck) von Datenworten enthalten sind.

14. Verfahren nach Anspruch 13,
**dadurch gekennzeichnet,**
**dass** der Schritt der Dekodierung (DCD, DECODAGE) von Format-Daten (Format) eines Pakets (Pck) von Datenworten während der Übertragung (Trm) des vorläufigen Datenworts (Hdr) des Pakets von Datenworten durchgeführt wird.

15. Verfahren nach Anspruch 13 oder 14,
**dadurch gekennzeichnet,**
**dass** dieses einen Schritt umfasst, bestehend daraus, die zukünftig verfügbare (Capa) oder nicht verfügbare Kapazität des Stufenpuffers im Verlauf der Übertragung aufgrund der Speicherung der Anzahl von Datenworten eines Pakets (Pck1) zu berechnen (CPT, Calcul1), wobei die Berechnung (Calcul1) die Dekodierung (DECODAGE) der Format-Daten nutzt, die während der Übertragung (Trm) des Pakets (Pck1) durchgeführt wird, wobei die Berechnung (Cpt) während der Übertragung (Trm) des Pakets (Pck) durchgeführt wird.

16. Verfahren nach Anspruch 15,
**dadurch gekennzeichnet,**
**dass** der Schritt der Berechnung (Cpt, Calcul1) der zukünftig verfügbaren (Capa) oder nicht verfügbaren Kapazität des Stufenpuffers während der Übertragung (Trm) des vorläufigen Datenworts (Hdr1) des Pakets (Pck1) von Datenworten durchgeführt wird.

17. Verfahren nach einem der Ansprüche 12 bis 16,
**dadurch gekennzeichnet,**
**dass** dieses einen Schritt umfasst, der darin besteht, während der Übertragung (Trm) eines Pakets (Pck2) den Zustand (Sts) der zukünftigen Verfügbarkeit oder Nicht-Verfügbarkeit des Stufenpuffers hinsichtlich der Annahme eines zusätzlichen Pakets (Pck3) anzuzeigen.

18. Verfahren nach Anspruch 17,
**dadurch gekennzeichnet,**
**dass** der Zustand (Sts) der zukünftigen Verfügbarkeit oder Nicht-Verfügbarkeit des Stufenpuffers vom Ende der Übertragung (Trm) des vorläufigen Datenwortes (Hdr2) des Pakets (Pck2) der Datenworte ausgehend angezeigt wird.
